# EUROPEAN PATENT APPLICATION

(11) **EP 3 330 425 A1**
(43) Date of publication of application: **06.06.2018**
(21) Application number: 16832241.0
(22) Date of filing: 26.07.2016
(51) Int. Cl.: D06F 37/20, D06F 37/30, H02K 5/00

(54) **MOTOR INSTALLATION APPARATUS FOR DRUM WASHING MACHINE**

(30) Priority: 31.07.2015 CN 201510465450
(71) Applicant: Qingdao Haier Drum Washing Machine Co., Ltd., Qingdao, Shandong 266101 (CN)
(72) Inventor: LV, Peishi, Qingdao Shandong 266101 (CN); LU, Jinbo, Qingdao Shandong 266101 (CN); FENG, Chen, Qingdao Shandong 266101 (CN); LI, Jingde, Qingdao Shandong 266101 (CN); YANG, Fei, Qingdao Shandong 266101 (CN); LIU, Xiaochun, Qingdao Shandong 266101 (CN)
(74) Representative: Ziebig & Hengelhaupt Patentanwälte PartG mbB
(86) International application number: PCT/CN2016/091743
(87) International publication number: WO 2017/020753

(57) **Abstract**

A motor mounting apparatus of a drum washing machine comprising a first connecting apparatus arranged on an outer drum, a second connecting apparatus arranged on a motor casing (2) and a connecting member, wherein the second connecting apparatus and the first connecting apparatus are connected together through the connecting member, the second connecting apparatus are three in number and are arranged on an back outer drum part (1) in a triangle arrangement, and the first connecting apparatus is in the triangle arrangement corresponding to the second connecting apparatus. According to the motor mounting apparatus of the drum washing machine, the fixing mounting apparatus is designed by utilizing a principle that triangle is stable, the three second connecting apparatuses are arranged on the motor casing (2) to match the three first connecting apparatuses on the back outer drum part (1), respectively, and the three second connecting apparatuses and the three first connecting apparatuses are fixedly connected through the connecting member. The three second connecting apparatuses are in the triangular-distribution arrangement, thus, the motor (2) can be simply and conveniently mounted on a flange of the back outer drum part (1) of the drum washing machine, crossing components mounting is not required, and the mounting error is low.

## Description

### TECHNICAL FIELD

The present disclosure relates to mounting apparatus, particularly relates to a motor mounting apparatus of a drum washing machine and belongs to the field of connecting fixing apparatus.

### BACKGROUND

An existing BLDC motor (Brushless DC Motor) has 4 fixing jaws, which are distributed at upper and lower ends of a motor casing and are mounted on an outer drum via screws/damping pads. When an back outer drum part has a relatively small height, the fixing jaws of the BLDC motor usually stretch across an front outer drum part and the back outer drum part, i.e., two fixing jaws are mounted on the back outer drum part, and two fixing jaws are mounted on the front outer drum part. The crossing components-mounting mode is large in error and low in accuracy, thus, the offsetting of a motor shaft may be caused, and thus, a quality problem is caused. The existing solution is as follows: the casing of the BLDC motor are mounted on the back outer drum part with only two fixing jaws. Due to two-point locating, the washing machine vibrates greatly and swings towards every direction during operating; and the motor works in a severe environment and is fixed through only two points, thus, the motor is not firm enough, and potential safety hazards are present.

In view of this, the present disclosure is provided.

### SUMMARY

A technical problem to be solved by the present disclosure is to overcome the defects in the prior art and provide a motor mounting apparatus of a drum washing machine. The motor mounting apparatus of the drum washing machine is low in mounting error and convenient to mount.

In order to solve the technical problem described above, a basic concept of a technical solution of the present disclosure is as follows:
a motor mounting apparatus of a drum washing machine comprises a first connecting apparatus arranged on an outer drum, a second connecting apparatus arranged on a motor casing and a connecting member. Wherein the second connecting apparatus and the first connecting apparatus are connected together through the connecting member, the second connecting apparatus are three in number and are disposed on aback outer drum part in a triangle arrangement, and the first connecting apparatus are in the triangle arrangement corresponding to the second connecting apparatus.

Further, the three second connecting apparatuses are in the equilateral-triangle arrangement, and correspondingly, the three first connecting apparatuses are also in the equilateral-triangle arrangement.

Further, the three second connecting apparatuses are in a right-angled isosceles triangle arrangement, and correspondingly, the three first connecting apparatuses are also in a right-angled isosceles triangle arrangement.

Further, the first connecting apparatus comprises a screw stub with a hollow screw hole, the screw stub is arranged on the back outer drum part, and a connection between the screw stub and the back outer drum part is reinforced through a reinforcing rib which is arranged around a lower part of the screw stub. The second connecting apparatus comprises a fixing foot, one end the fixing foot is connected with the motor casing, a connecting sleeve is arranged at another end of the fixing foot. The connecting sleeve sleeves the screw stub in a matched manner, and the screw stub and the connecting sleeve are fixedly connected through the connecting member.

Further, central axes of the two screw stubs are parallel to a central axis of the outer drum, and a central axis of another screw stub is vertical to the central axis of the outer drum.

Further, two fixing feet are arranged at positions, close to an output end of the motor, of the motor casing, central axes of the connecting sleeves of the two fixing feet are parallel to an output shaft of the motor, and the two fixing feet are matched with the two screw stubs, of which the central axes are parallel to the central axis of the outer drum.

Further, one fixing foot is arranged at a position, far away from the output end of the motor, of the motor casing, the central axis of the connecting sleeve of the fixing foot is vertical to the output shaft of the motor, and the fixing foot is matched with the screw stub, of which the central axis is vertical to the central axis of the outer drum.

Further, one fixing foot is arranged at a position, far away from the output end of the motor, of the motor casing and the fixing foot is provided with a through hole. A central axis of the through hole is vertical to the output shaft of the motor, and the through hole is matched with the screw stub, of which the central axis is vertical to the central axis of the outer drum.

Further, central axes of the three screw stubs are all parallel to the central axis of an outer drum.

Further, two fixing feet are arranged at positions, close to an output end of the motor, of the motor casing, central axes of connecting sleeves of the two fixing feet are parallel to an output shaft of the motor. One fixing foot is arranged at a position, far away from the output end of the motor, of the motor casing, and a central axis of a connecting sleeve of the fixing foot is parallel to the output shaft of the motor.

After adopting the above-mentioned technical scheme, as compared with the prior art, the present disclosure has the following beneficial effects.

According to the motor mounting apparatus of the drum washing machine, provided by the disclosure, the fixing mounting apparatus is designed by utilizing a principle that triangle is stable. Three second connecting apparatuses are arranged on the motor casing to match the three first connecting apparatuses arranged on the back outer drum part, respectively, and the three second connecting apparatuss and the three first connecting apparatuss are fixedly connected through the connecting members. The three second connecting apparatuses are in the triangular-distribution arrangement, thus, the BLDC motor can be simply and conveniently mounted on a flange of the back outer drum part of the drum washing machine. Besides, crossing components mounting is not required, and the mounting error is low.

The specific embodiments of the present disclosure are further described in detail below with reference accompanying to the drawings.

### BRIEF DESCRIPTION OF THE DRAWINGS

Fig. 1 is a mounting schematic diagram of a BLDC motor on a flange of a back outer drum part of a drum washing machine;
Fig. 2 is a partial enlarged view of the Fig. 1;
Fig. 3 is a mounting schematic diagram of a BLDC motor on a flange of an back outer drum part of a drum washing machine observed from a view angle parallel to a central axis of a rotary drum;
Fig. 4 is a partial enlarged view of the Fig. 3;
Fig. 5 is disassembled schematic diagrams of a connecting cap, a connecting sleeve and a screw stub;
Fig. 6 is an upward-view schematic diagram of a connecting cap.

Reference Signs: 1. back outer drum part, 2. motor, 31. first fixing foot, 41. connecting sleeve, 32. second fixing foot, 51. first screw stub, 511. reinforcing rib, 512. supporting plate, 513. screw hole, 52. second screw stub, 6. connecting cap, 61. top plate, 62. vertical tube, and 63. through hole.

### DETAILED DESCRIPTION

### Embodiment I

A motor mounting apparatus of a drum washing machine, provided by the disclosure, comprising a first connecting apparatus arranged on an outer drum, a second connecting apparatus arranged on a motor casing and a connecting member. The second connecting apparatus and the first connecting apparatus are connected together through the connecting member, the second connecting apparatuses are three in number and are disposed on an back outer drum part in a triangle arrangement, and the first connecting apparatus is in triangle arrangement corresponding to the second connecting apparatus.

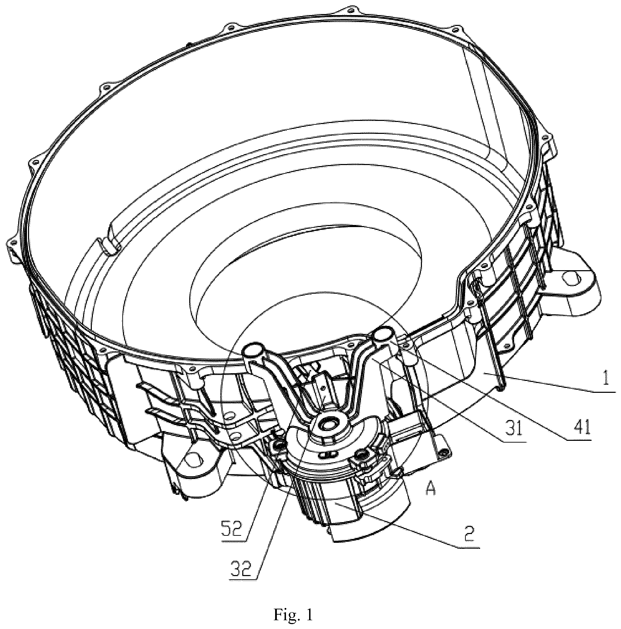

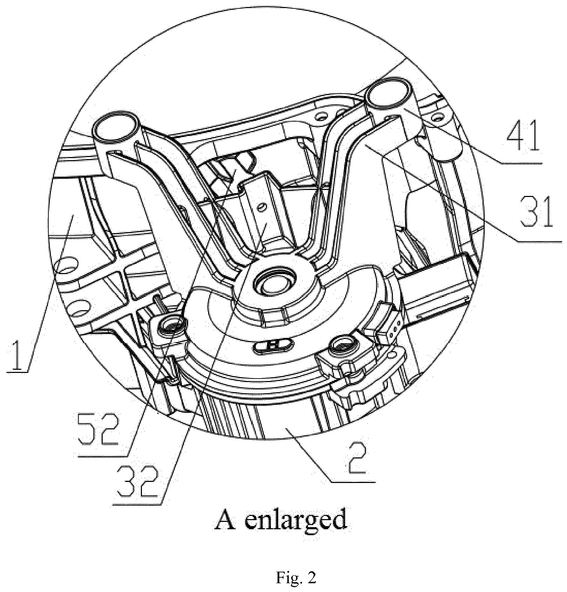

Referring to Fig. 1 and Fig. 2, the first connecting apparatus comprises a screw stub, the screw stub is arranged on a back outer drum part 1 and is provided with a screw hole. A reinforcing rib is arranged around the lower part of the screw stub, and the screw stub and the back outer drum part 1 are connected by the reinforcing rib.

The second connecting apparatus comprises a fixing foot, one end of the fixing foot is connected with the motor casing, another end of the fixing foot is provided with a connecting sleeve 41. The connecting sleeve 41 sleeves on the screw stub in a matched manner, and the screw stub and the connecting sleeve 41 are fixed through the connecting member.

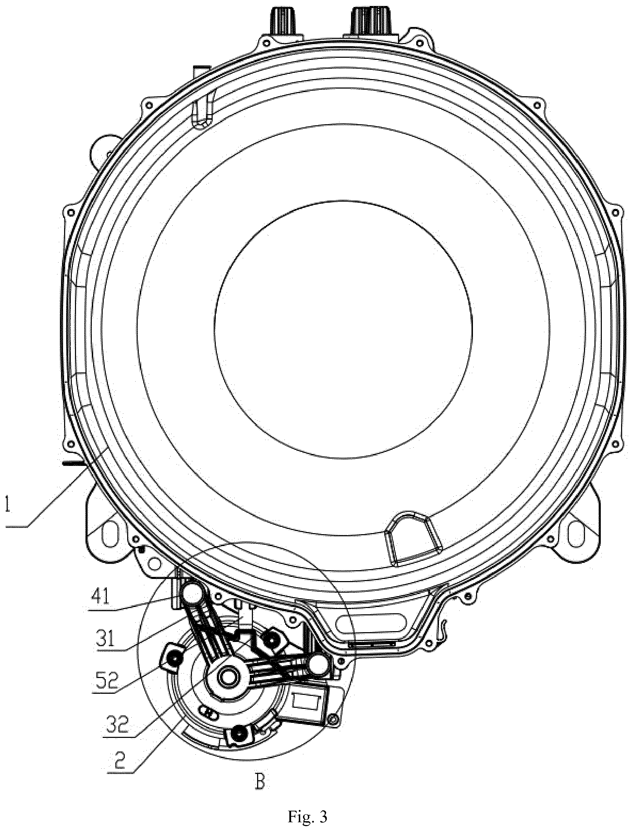

Referring to Fig. 1 to Fig. 5, in this embodiment, the screw stub comprises two first screw stubs 51 and one second screw stub 52, central axes of the two first screw stubs 51 are parallel to a central axis of the outer drum, and a central axis of the second screw stub 52 is vertical to the central axis of the outer drum. The central axis of the second screw stub 52 doesn't point to a center of circle of the back outer drum part, but is deviated from the center of the circle of the back outer drum part.

The fixing foot comprises a first fixing foot 31 and a second fixing foot 32. Two first fixing feet 31 are arranged at positions, close to an output end of the motor, of the motor casing; central axes of the connecting sleeves 41 of end parts of the two first fixing feet 31 are parallel to an output shaft of the motor, and the two first fixing feet 31 are matched with the two first screw stubs 51, of which the central axes are parallel to the central axis of the outer drum. The output shaft of the motor is parallel to the central axis of the outer drum.

In this embodiment, referring to Fig. 2, one second fixing foot 32 is arranged at a position, far away from the output end of the motor, of the motor casing and is provided with a through hole, a central axis of the through hole is vertical to the output shaft of the motor; the second fixing foot 32 is in fit connection with one second screw stub 52, and the central axis of the second screw stub 52 is vertical to the central axis of the outer drum.

In other embodiments, one second fixing foot is arranged at a position, far away from the output end of the motor, of the motor casing. A connecting sleeve is arranged at one end of the second fixing foot, a central axis of the connecting sleeve is vertical to the output end of the motor, and the connecting sleeve is matched with one screw stub, of which a central axis is vertical to the central axis of the outer drum.

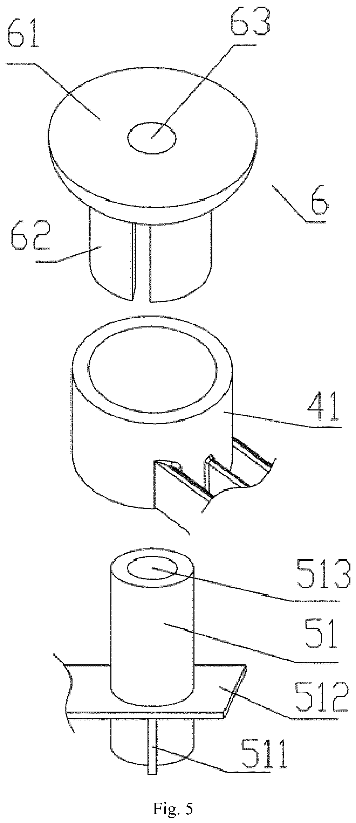

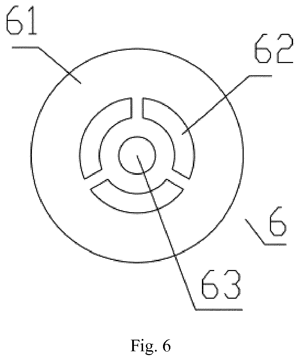

When a BLDC motor is mounted, the connecting sleeves 41 of the end parts of the two first fixing feet 31 of the motor casing sleeve on the two first screw stubs 51 which are located on the back outer drum part, respectively. Referring to Fig. 5, the outside diameter of the first screw stub 51 is smaller than the inside diameter of the connecting sleeve 41 in order to enable the connecting sleeve 41 to easily sleeve on the first screw stub 51, and in this embodiment, the connecting member comprises the connecting cap 6 and screw. Referring to Fig. 5 and Fig. 6, the connecting cap 6 comprises a top plate 61 and a vertical tube 62 which are connected with each other, the top plate 61 is a circular shape, the center of the top plate 61 has a through hole 63, and the diameter of the top plate 61 is greater than that of the connecting sleeve 41. Besides, the vertical tube 62 is arranged on one side face of the corresponding top plate 61. The vertical tube 62 is a tubular shape, a plurality of openings are uniformly formed in a tube wall of the vertical tube 62 along an axial direction of the corresponding vertical tube 62, and thus, the tube wall of the vertical tube 62 forms a plurality of split parts. In this embodiment, three openings are formed, and thus, the tube wall of each vertical tube 62 forms three split parts.

During mounting, the first screw stub 51 is inserted into the connecting sleeve 41, the vertical tube 62 of the connecting cap 6 is inserted into the gap between the connecting sleeve 41 and the first screw stub 51. The top plate 61 of the connecting cap 6 presses on upper part of the connecting sleeve 41 and upper part of the first screw stub 51, and the connecting sleeve 41 sleeves on the vertical tube 62 of the connecting cap 6, and the vertical tube 62 of the connecting cap 6 sleeves on the first screw stub 51. The thickness of the tube wall of the vertical tube 62 is adaptable to size of the gap between the connecting sleeve 41 and the first screw stub 51. Referring to Fig. 5, supporting plate 512 is arranged at a periphery of the first screw stub 51 and the supporting plate 512connects the first screw stub 51 and the back outer drum part 1. The supporting plate 512 supports and presses against the connecting sleeve 41 when the connecting sleeve 41 sleeves on the first screw stubs 51. The reinforcing rib 511 is arranged at the lower part of the first screw stub 51 and the reinforcing rib 511 are connected with the first screw stub 51 and the back outer drum part 1, and thus, the first screw stub 51 is stably arranged on the back outer drum part 1. Actually, the supporting plate 512 and the reinforcing rib 511 both play a role in enabling the first screw stub 51 to be stably arranged on the back outer drum part 1.

The through hole at the center of the top plate 61 of the connecting cap 6 and the screw hole of the first screw stub 51 are aligned with each other. The screw penetrates through the through hole at the center of the top plate 61 and is screwed into the screw hole of the first screw stub 51, thus, the top plate 61 of the connecting cap 6 presses the upper part of the connecting sleeve 41 and the upper part of the first screw stub 51. The connecting sleeve 41 and the first screw stub 51 are fixedly connected through the connecting cap 6 and the screw.

The tube wall of the vertical tube 62 of the connecting cap 6 forms three split parts, so that there is room for movement even when the vertical tube 62 of the connecting cap 6 is relatively poor in manufacturing accuracy, and thus the vertical tube 62 of the connecting cap 6 smoothly inserts into the gap between the connecting sleeve 41 and the first screw stub 51.

In other embodiments, the connecting cap 6 can also be omitted, one side of the connecting sleeve 41 is made into a bottom face, and a through hole which is used for passing through the screw is provided on the bottom face. During mounting, the first screw stub 51 is inserted into the connecting sleeve 41 from one side, where the corresponding bottom face is not formed, of each connecting sleeve 41, and the connecting sleeve 41 sleeves on the first screw stub 51. The tail of the screw penetrates through the through hole of the bottom face of the connecting sleeve 41 and is in threaded connection with the first screw stub 51, and the head of the screw is in contact with the bottom face of the connecting sleeve 41 and is stuck at outer side of the bottom face of the connecting sleeve 41. Thus, the connecting sleeve 41 and the first screw stub 51 are fixedly connected directly by the screw.

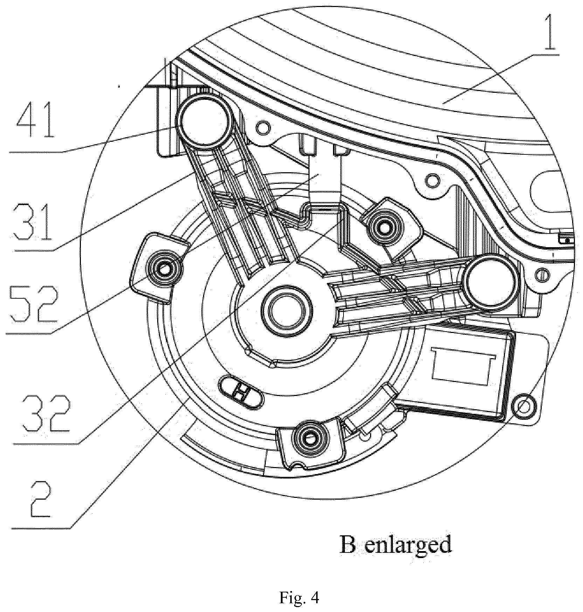

Referring to Fig. 2 and Fig. 4, the second fixing foot 32 is matched with the second screw stub 52, screw penetrates through the through hole of the second fixing foot 32 and then is screwed into the screw hole of the second screw stub 52, and thus, the second fixing foot 32 and the second screw stub 52 are fixedly connected. The connection between the second screw stub 52 and the back outer drum part 1 is reinforced through the reinforcing rib.

As the three second connecting apparatuses are in the triangle arrangement, correspondingly, the three first connecting apparatuses are also in the triangle arrangement. The central axes of two first screw stubs 51 of the three first connecting apparatuses are parallel to the central axis of the outer drum, and the central axis of one second screw stub 52 of the three first connecting apparatuses is vertical to the central axis of the outer drum. The central axis of the second screw stub 52 does not point to the center of the circle of the back outer drum part 1, but is deviated from the center of the circle of the back outer drum part 1. Thus, after the motor is fixedly connected with the back outer drum part 1, the motor can resist all kinds of sloshing forces from axial and radial directions of the outer drum, and the motor is stably connected with the back outer drum part 1.

In order to enable the motor to be more stably mounted on the back outer drum part 1, in other embodiments, the three second connecting apparatuses are in an equilateral-triangle arrangement, and correspondingly, the three first connecting apparatuses are also in the equilateral-triangle arrangement. Alternatively, the three second connecting apparatuses are in a right-angled isosceles triangle arrangement, and correspondingly, the three first connecting apparatuses are also in the right-angled isosceles triangle arrangement.

According to the motor mounting apparatus of the drum washing machine, provided by the disclosure, the mounting apparatus is designed by utilizing a principle that triangle is stable. The three second connecting apparatuses are arranged on the motor casing to match the three first connecting apparatuses arranged on the back outer drum part 1, respectivley, and the three second connecting apparatuses and the three first connecting apparatuses are fixedly connected through the connecting member. The three second connecting apparatuses are in a triangular-distribution arrangement, thus, the BLDC motor can be simply and conveniently mounted on a flange of the back outer drum part of the drum washing machine, and crossing components mounting is not required, and the mounting error is low.

### Embodiment II

The difference between this embodiment and the embodiment I lies in that: central axes of three screw stubs are all parallel to a central axis of an outer drum.

Two fixing feet are arranged at positions, close to an output end of the motor, of a motor casing, and central axes of connecting sleeves 41 of the two fixing feet are parallel to an output shaft of the motor. One fixing foot is arranged at a position, far away from the output end of the motor, of the motor casing, and a central axis of a connecting sleeve 41 of the fixing foot is parallel to the output shaft of the motor.

Implementation schemes in the above-mentioned embodiments can be further combined or replaced, the embodiments are only used for describing preferred embodiments of the present disclosure, but not intended to limit the conception and scope of the present disclosure, and all kinds of variations and improvements on the technical scheme of the present disclosure made by those skilled in the art without departing from the design concept of the present disclosure all fall within the protection scope of the present disclosure.

## Claims

1. A motor mounting apparatus of a drum washing machine comprising:
a first connecting apparatus arranged on an outer drum,
a second connecting apparatus arranged on a motor casing, and
a connecting member,
wherein the second connecting apparatus and the first connecting apparatus are connected together through the connecting member,
three second connecting apparatuses are provided and are disposed on a back outer drum part in a triangle arrangement, and
the first connecting apparatus is in the triangle arrangement corresponding to the second connecting apparatus.

2. The motor mounting apparatus of the drum washing machine according to claim 1, wherein the three second connecting apparatuses are in an equilateral-triangle arrangement, and correspondingly, three first connecting apparatuses are also in the equilateral-triangle arrangement.

3. The motor mounting apparatus of the drum washing machine according to claim 1, wherein the three second connecting apparatuses are in a right-angled isosceles triangle arrangement, and correspondingly, three first connecting apparatuses are also in the right-angled isosceles triangle arrangement.

4. The motor mounting apparatus of the drum washing machine according to any one of claims 1 to 3, wherein the first connecting apparatus comprises a screw stub with a hollow screw hole,
the screw stub is arranged on the back outer drum part, and a connection between the screw stub and the back outer drum part is reinforced through a reinforcing rib which is arranged around a lower part of the screw stub, and
the second connecting apparatus comprises a fixing foot, one end of the fixing foot is connected with the motor casing, a connecting sleeve is arranged at another end of the fixing foot,
the connecting sleeve sleeves on the screw stub in a matched manner, and the screw stub and the connecting sleeve are fixedly connected through the connecting member.

5. The motor mounting apparatus of the drum washing machine according to claim 4, wherein central axes of two screw stubs are parallel to a central axis of the outer drum, and a central axis of another screw stub is vertical to the central axis of the outer drum.

6. The motor mounting apparatus of the drum washing machine according to claim 5, wherein two fixing feet are arranged at a position, close to an output end of the motor, of the motor casing;
central axes of the connecting sleeves of the two fixing feet are parallel to an output shaft of the motor, and the two fixing feet are matched with the two screw stubs of which the central axes are parallel to the central axis of the outer drum.

7. The motor mounting apparatus of the drum washing machine according to claim 6, wherein one fixing foot is arranged at a position, far away from the output end of the motor, of the motor casing;
the central axis of the connecting sleeve of the fixing foot is vertical to the output shaft of the motor, and the fixing foot is matched with the screw stub of which the central axis is vertical to the central axis of the outer drum.

8. The motor mounting apparatus of the drum washing machine according to claim 6, wherein one fixing foot is arranged at a position, far away from the output end of the motor, of the motor casing;
the fixing foot is provided with a through hole, a central axis of the through hole is vertical to the output shaft of the motor, and the through hole is matched with the screw stub of which the central axis is vertical to the central axis of the outer drum.

9. The motor mounting apparatus of the drum washing machine according to claim 4, wherein central axes of the three screw stubs are all parallel to a central axis of the outer drum.

10. The motor mounting apparatus of the drum washing machine according to claim 8, wherein two fixing feet are arranged at a position, close to the output end of the motor, of the motor casing;
central axes of connecting sleeves of the two fixing feet are parallel to the output shaft of the motor;
one fixing foot is arranged at a position, far away from the output end of the motor, of the motor casing, and a central axis of a connecting sleeve of the fixing foot is parallel to the output shaft of the motor.
